# FASCICULE DE BREVET EUROPEEN

(11) **EP 3 250 872 B1**
(45) Date de publication et mention de la délivrance du brevet: **05.06.2019**
(21) Numéro de dépôt: 16701761.5
(22) Date de dépôt: 26.01.2016
(51) Int. Cl.: F28F 9/013, F28D 20/02

(54) **BATTERIE THERMIQUE À MATÉRIAU À CHANGEMENT DE PHASE ENCAPSULÉ**
WÄRME-AKKU MIT VERKAPSELTEM PHASENWECHSELMATERIAL
THERMAL BATTERY WITH ENCAPSULATED PHASE-CHANGE MATERIAL

(30) Priorité: 26.01.2015 FR 1550582
(43) Date de publication de la demande: 06.12.2017
(73) Titulaire: Valeo Systèmes Thermiques, 78320 Le Mesnil Saint Denis (FR)
(72) Inventeur: BRY, Samuel, 78322 Le Mesnil Saint-Denix cédex (FR); BOISSELLE, Patrick, 78322 Le Mesnil Saint-Denis cédex (FR); AZZOUZ, Kamel, 78322 Le Mesnil Saint-Denis cédex (FR)
(74) Mandataire: Neuviale, Bertrand
(86) Numéro de dépôt international: PCT/EP2016/051597
(87) Numéro de publication internationale: WO 2016/120283

(56) Documents cités:
- EP-A2- 2 149 770
- WO-A1-2013/075198
- WO-A1-2013/160951
- WO-A2-2011/019314
- WO-A2-2012/151096
- DE-A1- 3 005 510
- US-A1- 2011 253 341

## Description

La présente invention concerne le domaine de batteries thermiques et plus précisément les batteries thermiques comportant un matériau à changement de phase.

Les batteries thermiques sont généralement utilisées pour le chauffage de l'habitacle, notamment dans des véhicules électriques et hybrides ou alors pour le préchauffage d'un fluide caloporteur dans un circuit de gestion thermique. Les batteries thermiques peuvent également être utilisées pour le préchauffage de l'huile moteur ou de l'huile de boite de transmission automatique de véhicules à moteur à combustion interne.

Une batterie thermique à matériaux à changement de phase comporte généralement une enceinte formant un réservoir à l'intérieur duquel est placé le matériau à changement de phase généralement sous forme encapsulée. Les performances de la batterie thermique sont ainsi dépendantes de la quantité de matériau à changement de phase qu'elle peut contenir couplé avec l'obligation d'une circulation du fluide au sein du réservoir avec des pertes de charges les plus faibles possibles.

Le document WO 2012/151096 A2 décrit une batterie thermique selon le préambule de la revendication indépendante 1.

Un des buts de la présente invention est donc de remédier au moins partiellement aux inconvénients de l'art antérieur et de proposer une batterie thermique améliorée.

La présente invention concerne donc une batterie thermique comportant une enceinte comprenant une entrée et une sortie de fluide et comprenant en son sein des tubes de matériau à changement de phase encapsulé, lesdits tubes étant disposés parallèlement au flux de circulation du fluide, lesdits tubes comportant des entretoises radiales d'écartement desdits tubes.

Les entretoises radiales permettent de séparer les tubes et de les maintenir à une certaine distance les un des autres afin que le fluide puisse circuler entre les tubes.

Selon un aspect de l'invention, les entretoises radiales de deux tubes contiguës ont une position décalée l'une par rapport à l'autre de sorte à permettre la circulation du fluide.

Selon un autre aspect de l'invention, les entretoises radiales viennent de matière avec la paroi des tubes.

Selon un autre aspect de l'invention, les entretoises radiales sont des rondelles rapportées et à l'intérieur desquelles passent lesdits tubes.

Selon un autre aspect de l'invention, les rondelles sont fixées aux tubes.

Selon un autre aspect de l'invention, les rondelles d'un même tube sont maintenues à distance les une des autres au moyen d'au moins une entretoise.

Selon un autre aspect de l'invention, l'entretoise est un manchon entourant le tube.

Selon un autre aspect de l'invention, les rondelles viennent de matière avec le manchon.

Selon un autre aspect de l'invention, l'entretoise comporte au moins deux tiges disposées et fixées entre les rondelles.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique en perspective de tubes de matériau à changement de phase encapsulé au sein d'une batterie thermique,
- la figure 2 montre une représentation schématique en perspective d'un tube de matériau à changement de phase encapsulé selon un premier mode de réalisation,
- la figure 3 montre une représentation schématique en vue de côté d'un tube de matériau à changement de phase encapsulé selon un deuxième mode de réalisation,
- la figure 4 montre une représentation schématique en vue de côté d'un tube de matériau à changement de phase encapsulé selon un troisième mode de réalisation.

Sur les différentes figures, les éléments identiques portent les mêmes numéros de référence.

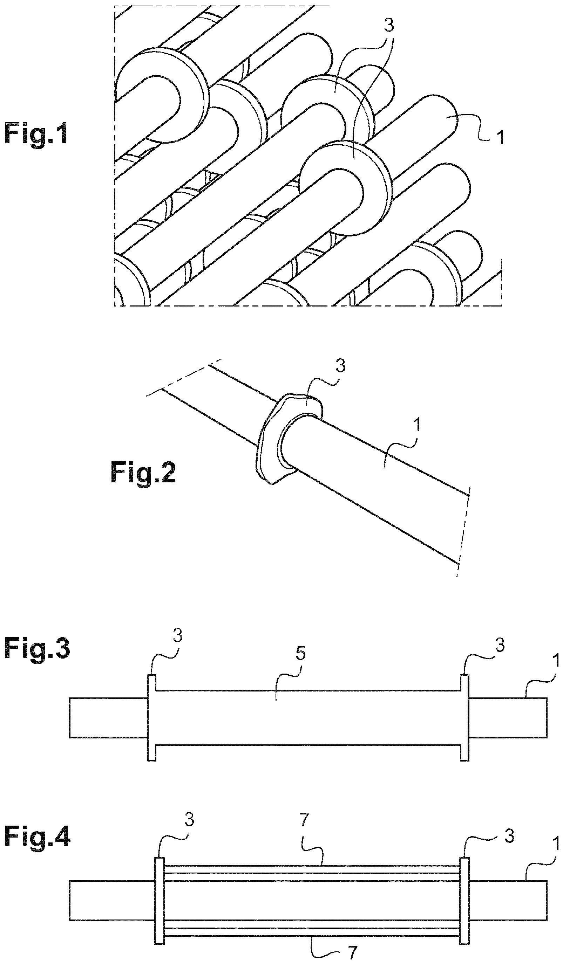

La figure 1 montre une représentation schématique de tubes 1 de matériau à changement de phase disposés parallèlement les un les autres et destinés à être disposés au sein d'une batterie thermique. Une telle batterie thermique comporte une enceinte (non représentée) qui comprend une entrée et une sortie de fluide. Les tubes 1 sont disposés parallèlement au flux de circulation dudit fluide. Les tubes 1 de matériau à changement de phase comportent une paroi tubulaire de préférence en matière plastique, par exemple en polycarbonate, à l'intérieur de laquelle est disposé un matériau à changement de phase. La paroi tubulaire est ensuite refermée de façon étanche à ses extrémités.

Les tubes 1 comportent des entretoises radiales 3 d'écartement desdits tubes1. Ces entretoises radiales 3 permettent de séparer les tubes 1 et de les maintenir à une certaine distance les un des autres afin que le fluide puisse circuler entre les tubes 1.

Les entretoises radiales 3 sont de préférence circulaires et chaque tube 1 comporte au moins une entretoise radiale 3 circulaire l'entourant complètement.

Comme le montre la figure 1, les entretoises radiales 3 de deux tubes 1 contiguës ont une position décalée l'une par rapport à l'autre sur leur tube 1 respectif de sorte à permettre la circulation du fluide au sein de la batterie thermique sans pour autant augmenter les pertes de charges.

Selon un premier mode de réalisation illustré à la figure 2, les entretoises radiales 3 peuvent venir de matière avec la paroi des tubes 1. Les entretoise peuvent ainsi être réalisées directement lors de la fabrication du tube 1 de matériau à changement de phase, par exemple par déformation à chaud de la paroi dudit tube 1.

Selon un second mode de réalisation illustré aux figures 3 et 4, les entretoises radiales 3 peuvent être des rondelles 3 rapportées et à l'intérieur desquelles passent lesdits tubes 1.

Ces rondelles 3 peuvent être fixées aux tubes 1, par exemple par collage ou encore soudure.

Alternativement, les rondelles 3 peuvent être simplement enfilées autour des tubes 1 et les rondelles 3 situées sur un même tube 1 peuvent être maintenue à distance l'une de l'autre par au moins une entretoise. Le fait de maintenir les rondelles 3 est nécessaire afin d'éviter quelles ne se déplacent le long des tubes 1 du fait de la circulation du fluide dans la batterie thermique.

Comme le montre la figure 3, l'entretoise entre les rondelles 3 d'un même tube 1 peut être un manchon 5 entourant ledit tube 1. Les rondelles 3 peuvent venir de matière avec ledit manchon 5 ou alors il peut simplement être disposé entre deux rondelles 3 indépendantes.

Ou alors, et comme le montre la figure 4, l'entretoise entre les rondelles 3 d'un même tube 1 peut comporter au moins deux tiges 7 disposées et fixées entre les rondelles 3.

Ainsi, on voit bien que la batterie thermique selon l'invention du fait de la présence des entretoises radiales 3 entre les tubes 1 de matériau à changement de phase encapsulé, permet une meilleure circulation du fluide entre lesdits tubes 1.

## Revendications

1. Batterie thermique comportant une enceinte comprenant une entrée et une sortie de fluide et comprenant en son sein des tubes (1) de matériau à changement de phase encapsulé, lesdits tubes (1) étant disposés parallèlement au flux de circulation du fluide, **caractérisée en ce que** lesdits tubes (1) comportent des entretoises radiales (3) d'écartement desdits tubes (1).

2. Batterie thermique selon la revendication précédente, **caractérisée en ce que** les entretoises radiales (3) de deux tubes (1) contiguës ont une position décalée l'une par rapport à l'autre de sorte à permettre la circulation du fluide.

3. Batterie thermique selon l'une des revendications précédentes, **caractérisée en ce que** les entretoises radiales (3) viennent de matière avec la paroi des tubes (1).

4. Batterie thermique selon l'une des revendications précédentes, **caractérisée en ce que** les entretoises radiales (3) sont des rondelles (3) rapportées et à l'intérieur desquelles passent lesdits tubes (1).

5. Batterie thermique selon la revendication précédente, **caractérisée en ce que** les rondelles (3) sont fixées aux tubes (1).

6. Batterie thermique selon la revendication 4, **caractérisée en ce que** les rondelles (3) d'un même tube (1) sont maintenues à distance les une des autres au moyen d'au moins une entretoise.

7. Batterie thermique selon la revendication 6, **caractérisée en ce que** l'entretoise est un manchon (5) entourant le tube (1).

8. Batterie thermique selon la revendication 7, **caractérisée en ce que** les rondelles (3) viennent de matière avec le manchon (5).

9. Batterie thermique selon la revendication 6, **caractérisée en ce que** l'entretoise comporte au moins deux tiges (7) disposées et fixées entre les rondelles (3).

## Patentansprüche

1. Wärmespeicher mit einem Gehäuse, das einen Fluideinlass und einen Fluidauslass umfasst und in seinem Innern Rohre (1) aus gekapseltem Phasenwechselmaterial umfasst, wobei die Rohre (1) parallel zum Zirkulationsstrom des Fluids angeordnet sind, **dadurch gekennzeichnet, dass** die Rohre (1) radiale Distanzstücke (3) zur Beabstandung der Rohre (1) aufweisen.

2. Wärmespeicher nach dem vorhergehenden Anspruch, **dadurch gekennzeichnet, dass** die radialen Distanzstücke (3) zweier angrenzender Rohre (1) eine zueinander versetzte Position haben, so dass die Zirkulation des Fluids ermöglicht wird.

3. Wärmespeicher nach einem der vorhergehenden Ansprüche, **dadurch gekennzeichnet, dass** die radialen Distanzstücke (3) einstückig mit der Wand der Rohre (1) sind.

4. Wärmespeicher nach einem der vorhergehenden Ansprüche, **dadurch gekennzeichnet, dass** die radialen Distanzstücke (3) aufgesetzte Scheiben (3) sind, in deren Inneren die Rohre (1) verlaufen.

5. Wärmespeicher nach dem vorhergehenden Anspruch, **dadurch gekennzeichnet, dass** die Scheiben (3) an den Rohren (1) befestigt sind.

6. Wärmespeicher nach Anspruch 4, **dadurch gekennzeichnet, dass** die Scheiben (3) eines jeweiligen Rohrs (1) mittels mindestens eines Distanzstücks voneinander beabstandet gehalten werden.

7. Wärmespeicher nach Anspruch 6, **dadurch gekennzeichnet, dass** das Distanzstück eine Hülse (5) ist, die das Rohr (1) umgibt.

8. Wärmespeicher nach Anspruch 7, **dadurch gekennzeichnet, dass** die Scheiben (3) einstückig mit der Hülse (5) sind.

9. Wärmespeicher nach Anspruch 6, **dadurch gekennzeichnet, dass** das Distanzstück mindestens zwei Stangen (7) aufweist, die zwischen den Scheiben (3) angeordnet und befestigt sind.

## Claims

1. Thermal battery comprising an enclosure comprising a fluid inlet and outlet and comprising within it tubes (1) of encapsulated phase-change material, said tubes (1) being arranged parallel to the circulating flow of fluid, **characterized in that** said tubes (1) comprise radial spacers (3) for spacing said tubes (1) apart.

2. Thermal battery according to the preceding claim, **characterized in that** the radial spacers (3) of two contiguous tubes (1) have a position that is offset from one another so as to allow the fluid to circulate.

3. Thermal battery according to one of the preceding claims, **characterized in that** the radial spacers (3) form an integral part of the wall of the tubes (1).

4. Thermal battery according to one of the preceding claims, **characterized in that** the radial spacers (3) are attached washers (3) through the inside of which said tubes (1) pass.

5. Thermal battery according to the preceding claim, **characterized in that** the washers (3) are fixed to the tubes (1).

6. Thermal battery according to Claim 4, **characterized in that** the washers (3) of one and the same tube (1) are held a distance apart by means of at least one spacer.

7. Thermal battery according to Claim 6, **characterized in that** the spacer is a sleeve (5) surrounding the tube (1).

8. Thermal battery according to Claim 7, **characterized in that** the washers (3) form an integral part of the sleeve (5).

9. Thermal battery according to Claim 6, **characterized in that** the spacer comprises at least two rods (7) arranged and fixed between the washers (3).
